(19) Europäisches Patentamt
European Patent Office
Office européen des brevets

(11) **EP 4 079 895 A1**

(12) **EUROPEAN PATENT APPLICATION**
published in accordance with Art. 153(4) EPC

(43) Date of publication:
**26.10.2022 Bulletin 2022/43**

(21) Application number: **20903503.9**

(22) Date of filing: **14.12.2020**

(51) International Patent Classification (IPC):
*C22C 38/02* (2006.01)    *C22C 38/04* (2006.01)
*C22C 38/06* (2006.01)    *C22C 38/14* (2006.01)
*C22C 38/16* (2006.01)    *C21D 8/12* (2006.01)

(52) Cooperative Patent Classification (CPC):
**C21D 8/12; C22C 38/02; C22C 38/04; C22C 38/06;
C22C 38/14; C22C 38/16**

(86) International application number:
**PCT/KR2020/018269**

(87) International publication number:
**WO 2021/125723 (24.06.2021 Gazette 2021/25)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.12.2019 KR 20190169954**

(71) Applicant: **POSCO
Pohang-si, Gyeongsangbuk-do 37859 (KR)**

(72) Inventors:
• **KIM, Jae-Song**
  **Pohang-si, Gyeongsangbuk-do 37859 (KR)**
• **SHIN, Su-Yong**
  **Pohang-si, Gyeongsangbuk-do 37859 (KR)**
• **KIM, Yong-Soo**
  **Pohang-si, Gyeongsangbuk-do 37859 (KR)**

(74) Representative: **Zech, Stefan Markus
Meissner Bolte Patentanwälte
Rechtsanwälte Partnerschaft mbB
Postfach 86 06 24
81633 München (DE)**

(54) **NON-ORIENTED ELECTRICAL STEEL SHEET AND MANUFACTURING METHOD THEREFOR**

(57) The present disclosure relates to a method for manufacturing a non-oriented electrical steel sheet and the manufactured non-oriented electrical steel sheet, the method including: heating a slab containing, by wt%, 0.005% or less of C, 2.5 to 4.0% or less of Si, 0.1% or less of P, 0.1 to 2.0% of Al, 0.2 to 2.5% of Mn, 0.003% or less of N, 0.005% or less of Ti and Nb, 0.003% or less of S, 0.005 to 0.025% of V, 0.1% or less of Cu, and a balance of Fe and inevitably mixed impurities, and satisfying the following Expression 1; hot-rolling the slab to manufacture a hot-rolled sheet; cold-rolling the hot-rolled sheet to manufacture a cold-rolled sheet; and performing final annealing on the cold-rolled sheet, wherein [Expression 1] is represented by $(51*[C])/12-0.002 \leq [V] \leq (51*[C])/12+0.004$ (in Expression 1, [C] and [V] represent contents (wt%) of C and V, respectively).

FIG. 1

**Description**

**[Technical Field]**

The present disclosure relates to a non-oriented electrical steel sheet and a method for manufacturing the same. More particularly, the present disclosure relates to a non-oriented electrical steel sheet having an excellent high-frequency iron loss by controlling a content of alloying elements constituting the electrical steel sheet to control a size of precipitates, and a method for manufacturing the same.

**[Background Art]**

Recently, in accordance with an increase in interest in efficient use of energy, attempts have been made to increase the efficiency of motors used in electrical devices such as a large generator and an eco-friendly vehicle such as a hybrid electric vehicle (HEV) or an electric vehicle (EV). As part of this, efforts are being made to obtain a motor having a rotational speed higher than that of a general motor by modulating a frequency, such as a brushless DC motor (BLDC motor).
In particular, in a case of a motor used for a driver of a hybrid electric vehicle or an electric vehicle, it is necessary to obtain a large output with a limited size, and a rotational speed of 10,000 rpm or more is required. In this case, an iron loss in an operating frequency range of 400 Hz or more is important, and a loss at a frequency of 1,000 Hz or more is also important due to a harmonic component present in a current generated by an inverter or the like and a harmonic component generated at ends of a rotor and a stator. In order to reduce the loss in this range, it is necessary to reduce an eddy current loss caused by a high frequency. In order to reduce the high-frequency loss, a method of reducing a thickness is the most effective, but studies for minimizing a reduction in thickness and reducing an iron loss have been required due to a cost and manufacturability of a steel sheet. As part of this, efforts have been made to reduce an iron loss of a high-alloy non-oriented electrical steel sheet containing a large amount of Si/Al/Mn and the like by improving cleanliness or a texture at the same thickness using segregation elements or elements with high oxygen affinity.
Until now, for such a purpose, there have been studies in which Mo, Y, Bi, P, and the like are actively used, and techniques for improving a texture by segregation and reducing an iron loss by coarsening of precipitates have been proposed.
However, since the segregation elements such as Bi and P are segregated at grain boundaries and cause deterioration of cold-rolling properties, in a case where the segregation elements are applied to a high-alloy non-oriented electrical steel sheet having a high content of Si, a real yield is reduced, Y forms an additional oxide, which causes deterioration of magnetic properties, and Mo exhibits magnetic property improvement smaller than a deviation of the iron loss due to an insignificant effect thereof when added, which is economically infeasible.

**[Disclosure]**

The present disclosure has been made in an effort to suppress deterioration of magnetic properties due to carbon after final annealing and to improve iron loss characteristics by controlling a content of alloying elements contained in a non-oriented electrical steel sheet.
An exemplary embodiment of the present disclosure provides a non-oriented electrical steel sheet containing, by wt%, 0.005% or less of C, 2.5 to 4.0% or less of Si, 0.1% or less of P, 0.1 to 2.0% of Al, 0.2 to 2.5% of Mn, 0.003% or less of N, 0.005% or less of Ti or Nb, 0.003% or less of S, 0.005 to 0.025% of V, 0.1% or less of Cu, and a balance of Fe and inevitably mixed impurities, wherein the non-oriented electrical steel sheet satisfies the following Expression 1,

$$[\text{Expression 1}]$$

$$(51*[\text{C}])/12-0.002 \le [\text{V}] \le (51*[\text{C}])/12+0.004$$

in Expression 1, [C] and [V] represent contents (wt%) of C and V, respectively.
In the non-oriented electrical steel sheet, an average particle diameter of VC precipitates may be 1 to 10 nm.
In the non-oriented electrical steel sheet, a density of VC precipitates may be $4*10^{15}$ to $1*10^{19}$ number/m$^3$.
In the non-oriented electrical steel sheet, an average particle diameter and a density of AIN precipitates may be 40 nm or less and $10 \times 10^{14}$ number/m$^3$ or less, respectively.
In the non-oriented electrical steel sheet, an average particle diameter and a density of one or more precipitates of NbC and TiC may be 15 nm or less and $15 \times 10^{15}$ number/m$^3$ or less, respectively.
In the non-oriented electrical steel sheet, an average particle diameter and a density of CuS precipitates may be 10 nm or less and $10 \times 10^{15}$ number/m$^3$ or less, respectively.

The non-oriented electrical steel sheet may have an average grain diameter of 50 to 150 $\mu$m.

The non-oriented electrical steel sheet may have an iron loss (W$_{10/400}$) of 12 W/kg or less.

Another exemplary embodiment of the present disclosure provides a method for manufacturing a non-oriented electrical steel sheet, the method including: heating a slab containing, by wt%, 0.005% or less of C, 2.5 to 4.0% or less of Si, 0.1% or less of P, 0.1 to 2.0% of Al, 0.2 to 2.5% of Mn, 0.003% or less of N, 0.005% or less of Ti and Nb, 0.003% or less of S, 0.005 to 0.025% of V, 0.1% or less of Cu, and a balance of Fe and inevitably mixed impurities, and satisfying the following Expression 1; hot-rolling the slab to manufacture a hot-rolled sheet; cold-rolling the hot-rolled sheet to manufacture a cold-rolled sheet; and performing final annealing on the cold-rolled sheet,

[Expression 1]

$$(51*[C])/12-0.002 \leq [V] \leq (51*[C])/12+0.004$$

in Expression 1, [C] and [V] represent contents (wt%) of C and V, respectively.

In the heating of the slab, a heating temperature of the slab may be 1,100 to 1,250°C.

The method for manufacturing a non-oriented electrical steel sheet may further include, after the hot-rolling of the slab to manufacture the hot-rolled sheet, annealing the hot-rolled sheet, wherein an annealing temperature of the hot-rolled sheet may be 850 to 1,200°C.

In the cold-rolling of the hot-rolled sheet to manufacture the cold-rolled sheet, the cold-rolling may be performed once or twice or more with intermediate annealing therebetween.

In the performing of the final annealing on the cold-rolled sheet, a final annealing temperature may be 900 to 1,050°C.

The method for manufacturing a non-oriented electrical steel sheet may further include, after the performing of the final annealing on the cold-rolled sheet, coating the finally annealed steel sheet with an insulating film.

An average grain diameter on the finally annealed steel sheet may be 50 to 150 $\mu$m.

**[Advantageous Effects]**

According to an exemplary embodiment of the present disclosure, the vanadium (V) is added in proportion to the carbon (C) in terms of content, such that the VC precipitates may be controlled to a size that does not affect magnetic properties.

According to an exemplary embodiment of the present disclosure, the deterioration of the magnetic properties due to C after the final annealing is effectively suppressed, such that iron loss characteristics may be improved and stably secured.

**[Description of the Drawings]**

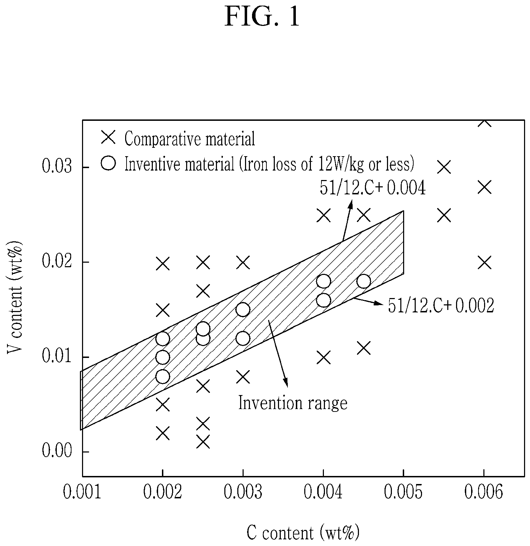

FIG. 1 is a graph showing vanadium contents according to carbon contents of Examples of the present disclosure and a relationship between the contents and an iron loss.

**[Mode for Invention]**

The terms "first", "second", "third", and the like are used to describe various parts, components, regions, layers, and/or sections, but are not limited thereto. These terms are only used to differentiate a specific part, component, region, layer, or section from another part, component, region, layer, or section. Accordingly, a first part, component, region, layer, or section which will be described hereinafter may be referred to as a second part, component, region, layer, or section without departing from the scope of the present invention.

Terminologies used herein are to mention only a specific exemplary embodiment, and are not to limit the present invention. Singular forms used herein include plural forms as long as phrases do not clearly indicate an opposite meaning. The term "comprising" used in the present specification concretely indicates specific properties, regions, integers, steps, operations, elements, and/or components, and is not to exclude the presence or addition of other specific properties, regions, integers, steps, operations, elements, and/or components.

When any part is positioned "on" or "above" another part, it means that the part may be directly on or above the other part or another part may be interposed therebetween. In contrast, when any part is positioned "directly on" another part, it means that there is no part interposed therebetween.

In addition, unless otherwise stated, % means wt%, and 1 ppm is 0.0001 wt%.

Unless defined otherwise, all terms including technical terms and scientific terms used herein have the same meanings as understood by those skilled in the art to which the present invention pertains. Terms defined in a generally used dictionary are additionally interpreted as having the meaning matched to the related technical document and the currently disclosed contents and are not interpreted as ideal or very formal meanings unless otherwise defined.

Hereinafter, exemplary embodiments of the present invention will be described in detail so that those skilled in the art to which the present invention pertains may easily practice the present invention. However, the present invention may be implemented in various different forms and is not limited to exemplary embodiments described herein.

As a result of considering an effect of various alloying elements by type, a recrystallization behavior or structure change characteristics by adjusting various process factors of hot-rolling, cold-rolling, and final annealing, and the like in manufacturing a non-oriented electrical steel sheet used in a drive motor for an eco-friendly vehicle, in which a high-frequency iron loss is important, the present disclosure is to provide a method of providing a non-oriented electrical steel sheet having a low high-frequency iron loss by appropriately controlling C precipitates using V.

In addition, as a result of studying high-frequency iron loss characteristics of a high-silicon non-oriented electrical steel sheet having a high alloy content of Si of 2.5 wt% or more, it is found that C-based precipitates present in the steel sheet are an important factor affecting the iron loss, the present disclosure is intended to control the C-based precipitates. In general, it is known that C-based precipitates having a high re-dissolution temperature and the like cause weakness of a (001) texture advantageous in magnetic properties and further inhibit movement of a magnetic domain and cause an increase in iron loss. However, precipitates having a low re-dissolution temperature not only may improve the texture when an annealing temperature of a hot-rolled sheet is relatively high, but also may act as a positive factor for the magnetic properties due to a small size of the precipitates.

Therefore, it is found that VC precipitates formed by combining V with C may play this role because it has a low re-dissolution temperature, and the present disclosure is intended to use the VC precipitates in a non-oriented electrical steel sheet and a method for manufacturing the same. In the case of VC, when the V content is appropriately controlled, the re-dissolution temperature is low, around 700°C, such that the texture may be improved during recrystallization, and the magnetic properties may be improved with a size of 10 nm or less.

Hereinafter, each step will be described in detail.

A method for manufacturing a non-oriented electrical steel sheet according to the present disclosure may include: heating a slab containing, by wt%, 0.005% or less of C, 2.5 to 4.0% or less of Si, 0.1% or less of P, 0.1 to 2.0% of Al, 0.2 to 2.5% of Mn, 0.003% or less of N, 0.005% or less of Ti and Nb, 0.003% or less of S, 0.005 to 0.025% of V, 0.1% or less of Cu, and a balance of Fe and inevitably mixed impurities, and satisfying the following Expression 1; hot-rolling the slab to manufacture a hot-rolled sheet; cold-rolling the hot-rolled sheet to manufacture a cold-rolled sheet; and performing final annealing on the cold-rolled sheet,

[Expression 1]

$$(51*[C])/12-0.002 \leq [V] \leq (51*[C])/12+0.004$$

in Expression 1, [C] and [V] represent contents (wt%) of C and V, respectively.

During the manufacturing process, carbon (C) present in a steel material is combined with vanadium (V) to form VC precipitates, and an average particle diameter of the formed VC precipitates may be 10 nm or less. Specifically, the average particle diameter of the VC precipitates may be 1 to 10 nm or 2 nm to 8 nm. In addition, a density of the VC precipitates may be $4*10^{15}$ to $1*10^{19}$ number/m$^3$.

In addition, in the non-oriented electrical steel sheet of the present disclosure, Al present in the steel material may be combined with N to form AlN precipitates. The formed AlN precipitates may inhibit a grain growth and may further interfere with movement of a magnetic domain, which may cause deterioration of the magnetic properties. Therefore, in the non-oriented electrical steel sheet of the present disclosure, it is more preferable that an average particle diameter of the AlN precipitates is smaller, and the average particle diameter of the AlN precipitates may be 40 nm or less. Specifically, the average particle diameter of the AlN precipitates may be 1 to 40 nm, more specifically 1 to 35 nm, and still more specifically 1 to 32 nm. In addition, in the non-oriented electrical steel sheet of the present disclosure, a density of the AlN precipitates may be $10*10^{14}$ number/m$^3$ or less. Specifically, the density of the AlN precipitates may be 4 to $8*10^{14}$ number/m$^3$, and more specifically 5 to $7*10^{14}$ number/m$^3$.

In addition, in the non-oriented electrical steel sheet of the present disclosure, Nb and Ti present in the steel material may be combined with C to form NbC and TiC precipitates. The formed NbC and TiC precipitates are finely precipitated at around 900°C, which may significantly affect the magnetic properties, and thus, a size and a density of each of the NbC and TiC precipitates need to be controlled. Therefore, in the non-oriented electrical steel sheet of the present disclosure, it is more preferable that an average particle diameter of one or more precipitates of NbC and TiC is smaller, and the average particle diameter of the one or more precipitates of NbC and TiC may be, for example, 15 nm or less. Specifically, the average particle diameter of the one or more precipitates of NbC and TiC may be 1 to 15 nm. More specifically, the average particle diameter of the one or more precipitates of NbC and TiC may be 1 to 13 nm, and more specifically 1 to 11 nm. In addition, in the non-oriented electrical steel sheet of the present disclosure, a density of the one or more precipitates of NbC and TiC may be $15*10^{15}$ number/$m^3$ or less.

Specifically, the density of the one or more precipitates of NbC and TiC may be 9 to $11*10^{15}$ number/$m^3$, and more specifically 9 to $10*10^{15}$ number/$m^3$.

In addition, in the non-oriented electrical steel sheet of the present disclosure, Cu present in the steel material may be combined with S to form CuS precipitates. The formed CuS precipitates are generally precipitated as sulfides smaller than coarse MnS, which may cause deterioration of the magnetic properties, and thus, a size and a density thereof need to be controlled. Therefore, in the non-oriented electrical steel sheet of the present disclosure, an average particle diameter of the CuS precipitates may be 10 nm or less. Specifically, the average particle diameter of the CuS precipitates may be 5 to 9 nm, and more specifically 5 to 7 nm. In addition, in the non-oriented electrical steel sheet of the present disclosure, a density of the CuS precipitates may be $10*10^{15}$ number/$m^3$ or less. Specifically, the density of the CuS precipitates may be 4 to $8*10^{15}$ number/$m^3$, and more specifically 4 to $6*10^{15}$ number/$m^3$.

First, the reason for limiting the components of the non-oriented electrical steel sheet of the present invention will be described. Unless otherwise specified, a content in the following means wt%.

[C: 0.005 wt% or less]

C causes magnetic aging in a final product to cause deterioration of the magnetic properties during use, and thus, a content of C is limited to 0.005 wt% or less. It is more preferable for the magnetic properties as the content of C is lower, and thus, it is more preferable that the content of C in the final product is limited to 0.004 wt% or less.

[Si: 2.5 to 4.0 wt% or less]

Si is added as a component that increases specific resistance to reduce an eddy current loss in an iron loss. In the present invention, in order to sufficiently improve a high-frequency low iron loss, Si needs to be added in an amount of 2.5 wt% or more. However, when Si is added in an amount of more than 4.0 wt%, even when a structure before cold-rolling is improved, a cold-rolling property is deteriorated and sheet breakage occurs. Therefore, it is preferable to limit the content of Si to 4.0 wt% or less.

[P: 0.1 wt% or less]

P is added to increase specific resistance and to improve the texture so as to improve the magnetic properties. However, when P is excessively added, the cold-rolling property is deteriorated. Therefore, it is preferable to limit a content of P to 0.1 wt% or less.

[S: 0.003 wt% or less]

S forms fine precipitates such as MnS and CuS, which inhibits a grain growth and causes deterioration of the magnetic properties. Therefore, it is preferable to limit a content of S to a low level, and in the present invention, the content of S is limited to 0.003 wt% or less.

[Al: 0.3 to 2.0 wt%]

Al is an effective component to reduce an eddy current loss by increasing specific resistance, and although it has a lower effect than Si, Al provides an effect of increasing strength when added. When Al is added in an amount of less than 0.3 wt%, AlN precipitates are finely precipitated, which causes deterioration of the magnetic properties. On the other hand, when Al is added in an amount of more than 2.0 wt%, processability is deteriorated. Therefore, it is preferable that the content of Al is limited to 0.3 to 2.0 wt%.

[Mn: 0.2 to 2.5 wt%]

When Mn is added in an amount of less than 0.2 wt%, fine MnS precipitates are formed to inhibit a grain growth, which causes deterioration of the magnetic properties. Therefore, it is preferable that Mn is added in an amount of 0.2 wt% or more so that MnS precipitates are coarsely formed. In addition, when Mn is added in an amount of 0.2 wt% or more, it is possible to prevent the S component from being precipitated as CuS, which is a finer precipitate, thereby preventing deterioration of the magnetic properties. However, when Mn is excessively added, the magnetic properties are deteriorated. Therefore, it is preferable that the content of Mn is 0.2 to 2.5 wt%.

[N: 0.003 wt% or less]

N forms fine and long AlN precipitates in a base material to inhibit a grain growth and increase an iron loss, and thus, N is preferably added as small as possible. In the present invention, the content of N is limited to 0.003 wt% or less.

[Ti and Nb :0.005 wt% or less]

Ti and Nb form fine Ti(Nb)CN precipitates to inhibit a grain growth. When Ti and Nb are added in an amount of more than 0.005 wt%, a large amount of fine precipitates are formed, which causes deterioration of the texture. Thus, the magnetic properties are deteriorated and a grain growth is inhibited in a customer's heat treatment process. Therefore, the content of Ti is limited to 0.005 wt% or less.

[Cu: 0.1 wt% or less]

In the present disclosure, when Cu is added in an excessive amount, Cu is precipitated as CuS, which is a fine precipitate, which may cause deterioration of the magnetic properties. Therefore, Cu may be added in an amount of 0.1 wt% or less. Specifically, Cu may be added in an amount of more than 0 and 0.1 wt% or less, and specifically in an amount of more than 0 and 0.02 wt% or less.

[V: 0.005 to 0.25 wt%]

In the present invention, V is an essential element for reducing an iron loss by combining with C to form VC having a low re-dissolution temperature so as to improve a texture. V may serve to bind C by generating VC precipitates and may suppress formation of Fe carbides that cause an increase in iron loss. As a result, V forms VC precipitates, such that formation of Fe carbides may be suppressed, thereby reducing an iron loss. In order to play this role, V needs to be added in an amount of 0.005 to 0.25 wt% in a range in which the following Expression 1 is satisfied. In this case, a size of the VC precipitates may be controlled to 10 nm or less, and a density of the VC precipitates may be controlled in a range of $4*10^{15}$ to $1*10^{19}$ number/m$^3$, such that the influence of the size and the density on the iron loss may be reduced.

[Expression 1]

$$(51*[C])/12-0.002 \le [V] \le (51*[C])/12+0.004$$

in Expression 1, [C] and [V] represent contents (wt%) of C and V, respectively.

Hereinafter, a method for manufacturing a non-oriented electrical steel sheet of the present invention will be described.

In the method for manufacturing a non-oriented electrical steel sheet of the present invention, a slab having the above composition is placed and heated in a heating furnace. A heating temperature of the slab is preferably 1,100 to 1,250°C. When the slab is heated at a temperature of higher than 1,250°C, precipitates that cause deterioration of the magnetic properties may be redissolved and finely precipitated after hot-rolling.

When the slab is heated, subsequently, hot-rolling is performed, and a hot-rolled sheet subjected to the hot-rolling is coiled. The coiled hot-rolled sheet is subjected to hot-rolled sheet annealing, if necessary. It is preferable to perform the hot-rolled sheet annealing in manufacturing a high-grade electrical steel sheet without phase transformation, and it is effective to improve a texture of a finally annealed sheet so as to improve a magnetic flux density. When the hot-rolled sheet annealing is performed, the hot-rolled sheet annealing is preferably performed at a temperature of 850 to 1,200°C. When the hot-rolled sheet annealing temperature is lower than 850°C, a structure does not grow or grows finely. Therefore, it is difficult to expect an effect of increasing the magnetic flux density. When the hot-rolled sheet annealing temperature is higher than 1,200°C, the magnetic properties may be rather deteriorated, and rolling workability may be deteriorated due to a deformation of a sheet shape.

As described above, after the hot-rolled sheet annealing is performed, the hot-rolled sheet is pickled and cold-rolled to manufacture a cold-rolled sheet having a desired sheet thickness. The cold-rolling is performed by performing cold-rolling once or by performing cold-rolling twice or more with intermediate annealing therebetween, if necessary.

The cold-rolled sheet subjected to the cold-rolling is subjected to final annealing. The final annealing may be performed at a temperature of 900 to 1,050°C so that a size of a grain in a cross section of the steel sheet is 50 to 150 µm. When the heat treatment is performed at a temperature lower than 900°C, the iron loss is increased due to a small grain size, and when the heat treatment is performed at a temperature higher than 1,050°C, the grain size is coarsened and an abnormal eddy current loss is increased, which causes an increase in total iron loss.

The finally annealed steel sheet may be coated with an insulating film by a general method, and the coated steel sheet may be shipped to a customer. When the insulating film is coated, a general coating material may be applied, and either a chromium (Cr)-type coating material or a Cr-free-type coating material may be used without limitation.

Hereinafter, the present invention will be described in more detail with reference to Examples. However, these Examples are only for illustrating the present invention, and the present invention is not limited thereto.

**Examples**

A slab containing, by wt%, alloying components and impurities with the composition as shown in Tables 1 and 2 was re-heated to 1,130°C, and the heated slab was hot-rolled to 2.0 mm, thereby manufacturing a hot-rolled sheet. Each of the manufactured hot-rolled sheets was coiled at 620°C and then cooled in the air, and hot-rolled sheet annealing was performed at 1,020°C for 2 minutes. Subsequently, the hot-rolled sheet was pickled and then cold-rolling was performed so that a thickness was 0.25 mm. Subsequently, the cold-rolled sheet was subjected to final annealing at 1,000°C for 2 minutes under an atmospheric condition of 20% hydrogen and 80% nitrogen, and then, magnetic properties and precipitates were analyzed. An iron loss was determined by performing measurement in a rolling direction and a rolling perpendicular direction using a single sheet measuring device having a size of $60*60$ mm$^2$ and averaging the measured values, and a size of VC precipitates was measured using a replication method of a transmission electron microscope. The results thereof are shown in Table 2.

[Table 1]

| Steel type | Si (wt%) | Al (wt%) | Mn (wt%) | N (wt%) | P (wt%) | Ti (wt%) | Nb (wt%) | S (wt%) | Cu (wt%) |
|---|---|---|---|---|---|---|---|---|---|
| A | 3.6 | 0.5 | 0.8 | 0.0015 | 0.01 | 0.0015 | 0.0010 | 0.0015 | 0.007 |
| B | 2.8 | 1.3 | 0.6 | 0.0015 | 0.01 | 0.0018 | 0.0012 | 0.0020 | 0.007 |
| C | 3.6 | 0.002 | 0.8 | 0.0015 | 0.01 | 0.0015 | 0.0010 | 0.0015 | 0.007 |
| D | 3.6 | 0.5 | 0.8 | 0.0015 | 0.01 | 0.01 | 0.01 | 0.0015 | 0.007 |
| E | 3.6 | 0.5 | 0.8 | 0.0015 | 0.01 | 0.0015 | 0.0010 | 0.0015 | 0.08 |

[Table 2]

| Steel type | C content (wt%) | (51*[C])/12-0.002 (wt%) | (51*[C])/12+0.004 (wt%) | V content (wt%) | Iron loss (W10/400, W/kg) | VC average size (nm) | VC precipitate density (number/m$^3$) | Remarks |
|---|---|---|---|---|---|---|---|---|
| A | 0.002 | 0.007 | 0.013 | 0.002 | 12.2 | 2 | $2*10^{18}$ | |
| A | 0.002 | 0.007 | 0.013 | 0.005 | 12.1 | 2 | $4*10^{16}$ | |
| A | 0.002 | 0.007 | 0.013 | 0.008 | 11.4 | 4 | $2*10^{16}$ | |
| A | 0.002 | 0.007 | 0.013 | 0.01 | 11.3 | 6 | $4*10^{15}$ | |
| A | 0.002 | 0.007 | 0.013 | 0.012 | 11.4 | 7 | $5*10^{18}$ | |
| A | 0.002 | 0.007 | 0.013 | 0.015 | 12.2 | 20 | $9*10^{16}$ | |
| A | 0.002 | 0.007 | 0.013 | 0.02 | 12.2 | 25 | $2*10^{16}$ | |
| A | 0.003 | 0.011 | 0.017 | 0.008 | 12.2 | 4 | $3*10^{15}$ | |
| A | 0.003 | 0.011 | 0.017 | 0.012 | 11.4 | 6 | $3*10^{17}$ | |
| A | 0.003 | 0.011 | 0.017 | 0.015 | 11.6 | 8 | $5*10^{15}$ | Inventive Material 5 |

(continued)

| Steel type | C content (wt%) | (51*[C])/12-0.002 (wt%) | (51*[C])/12+0.004 (wt%) | V content (wt%) | Iron loss (W10/400, W/kg) | VC average size (nm) | VC precipitate density (number/m$^3$) | Remarks |
|---|---|---|---|---|---|---|---|---|
| A | 0.003 | 0.011 | 0.017 | 0.02 | 12.2 | 13 | $1*10^{15}$ | Comparative Material 6 |
| A | 0.004 | 0.015 | 0.021 | 0.01 | 12.1 | 3 | $5*10^{18}$ | Comparative Material 7 |
| A | 0.004 | 0.015 | 0.021 | 0.016 | 11.5 | 5 | $1*10^{19}$ | Inventive Material 6 |
| A | 0.004 | 0.015 | 0.021 | 0.018 | 11.4 | 8 | $2*10^{17}$ | Inventive Material 7 |
| A | 0.004 | 0.015 | 0.021 | 0.025 | 12.2 | 15 | $3*10^{16}$ | Comparative Material 8 |
| A | 0.006 | 0.024 | 0.030 | 0.02 | 12.2 | 10 | $2*10^{16}$ | Comparative Material 9 |
| A | 0.006 | 0.024 | 0.030 | 0.028 | 12.3 | 15 | $7*10^{14}$ | Comparative Material 10 |
| A | 0.006 | 0.024 | 0.030 | 0.035 | 12.3 | 25 | $4*10^{14}$ | Comparative Material 11 |
| B | 0.0025 | 0.009 | 0.015 | 0.003 | 12.2 | 2 | $5*10^{18}$ | Comparative Material 12 |
| B | 0.0025 | 0.009 | 0.015 | 0.007 | 12.1 | 2 | $2*10^{16}$ | Comparative Material 13 |
| B | 0.0025 | 0.009 | 0.015 | 0.0011 | 12.1 | 4 | $4*10^{15}$ | Comparative Material 14 |
| B | 0.0025 | 0.009 | 0.015 | 0.012 | 11.3 | 6 | $9*10^{15}$ | Inventive Material 8 |
| B | 0.0025 | 0.009 | 0.015 | 0.013 | 11.4 | 7 | $5*10^{15}$ | Inventive Material 9 |
| B | 0.0025 | 0.009 | 0.015 | 0.017 | 12.1 | 20 | $2*10^{15}$ | Comparative Material 15 |
| B | 0.0025 | 0.009 | 0.015 | 0.02 | 12.3 | 25 | $9*10^{15}$ | Comparative Material 16 |
| B | 0.0045 | 0.017 | 0.023 | 0.011 | 12.2 | 3 | $1*10^{13}$ | Comparative Material 17 |
| B | 0.0045 | 0.017 | 0.023 | 0.018 | 11.4 | 8 | $9*10^{15}$ | Inventive Material 10 |
| B | 0.0045 | 0.017 | 0.023 | 0.025 | 12.3 | 15 | $4*10^{15}$ | Comparative Material 18 |
| B | 0.0055 | 0.021 | 0.027 | 0.025 | 12.4 | 12 | $9*10^{15}$ | Comparative Material 19 |
| B | 0.0055 | 0.021 | 0.027 | 0.03 | 12.3 | 15 | $5*10^{15}$ | Comparative Material 20 |
| B | 0.0055 | 0.021 | 0.027 | 0.039 | 12.4 | 21 | $2*10^{15}$ | Comparative Material 21 |

(continued)

| Steel type | C content (wt%) | (51*[C])/12-0.002 (wt%) | (51*[C])/12+0.004 (wt%) | V content (wt%) | Iron loss (W10/400, W/kg) | VC average size (nm) | VC precipitate density (number/m³) | Remarks |
|---|---|---|---|---|---|---|---|---|
| C | 0.002 | 0.007 | 0.013 | 0.01 | 12.8 | 8 | $9*10^{15}$ | Comparative Material 22 |
| D | 0.002 | 0.007 | 0.013 | 0.01 | 14.7 | 7 | $1*10^{13}$ | Comparative Material 23 |
| E | 0.002 | 0.007 | 0.013 | 0.01 | 12.8 | 8 | $9*10^{15}$ | Comparative Material 24 |

The V contents [V] according to the C contents [C] in Comparative Materials 1 to 21 and Inventive Materials 1 to 10 of Table 2 are shown in FIG. 1 as a graph. As can be seen in FIG. 1, in the cases of Inventive Materials 1 to 10 in which the V content was more than (51*[C])/12-0.002 and less than (51*[C])/12+0.004, it could be confirmed that the iron loss showed a low iron loss value of 12.0 W/kg or less and was included in the range. In the cases of Comparative Examples 10 and 19, the V content satisfied the above range, but the C content was higher than 0.005%, and the size of VC was 10 nm or more, and thus, the iron loss was reduced and exceeded 12.0 W/kg.

Therefore, it could be appreciated that, in order to realize excellent properties suitable for a drive motor of an eco-friendly vehicle, such as a low high-frequency iron loss ($W_{10/400}$) of 12 W/kg or less, as shown in Inventive Materials 1 to 10 of Table 2, V was added in proportion of to the amount of C, but C was added so that the amount of C did not exceed 0.005%.

The present invention is not limited to the exemplary embodiments, but may be manufactured in various different forms, and it will be apparent to those skilled in the art to which the present invention pertains that various modifications and alterations may be made without departing from the technical spirit or essential feature of the present invention. Therefore, it is to be understood that the exemplary embodiments described hereinabove are illustrative rather than being restrictive in all aspects.

**Claims**

1. A non-oriented electrical steel sheet comprising, by wt%, 0.005% or less of C, 2.5 to 4.0% or less of Si, 0.1% or less of P, 0.1 to 2.0% of Al, 0.2 to 2.5% of Mn, 0.003% or less of N, 0.005% or less of Ti or Nb, 0.003% or less of S, 0.005 to 0.025% of V, 0.1% or less of Cu, and a balance of Fe and inevitably mixed impurities,

   wherein the non-oriented electrical steel sheet satisfies the following Expression 1,

   [Expression 1]

   $$(51*[C])/12-0.002 \leq [V] \leq (51*[C])/12+0.004$$

   in Expression 1, [C] and [V] represent contents (wt%) of C and V, respectively.

2. The non-oriented electrical steel sheet of claim 1, wherein:
   in the non-oriented electrical steel sheet, an average particle diameter of VC precipitates is 1 to 10 nm.

3. The non-oriented electrical steel sheet of claim 1, wherein:
   in the non-oriented electrical steel sheet, a density of VC precipitates is $4*10^{15}$ to $1*10^{19}$ number/m³.

4. The non-oriented electrical steel sheet of claim 1, wherein:
   in the non-oriented electrical steel sheet, an average particle diameter and a density of AIN precipitates are 40 nm or less and $10 \times 10^{14}$ number/m³ or less, respectively.

5. The non-oriented electrical steel sheet of claim 1, wherein:

in the non-oriented electrical steel sheet, an average particle diameter and a density of one or more precipitates of NbC and TiC are 15 nm or less and $15 \times 10^{15}$ number/m$^3$ or less, respectively.

6. The non-oriented electrical steel sheet of claim 1, wherein:
in the non-oriented electrical steel sheet, an average particle diameter and a density of CuS precipitates are 10 nm or less and $10 \times 10^{15}$ number/m$^3$ or less, respectively.

7. The non-oriented electrical steel sheet of claim 1, wherein:
the non-oriented electrical steel sheet has an average grain diameter of 50 to 150 $\mu$m.

8. The non-oriented electrical steel sheet of claim 1, wherein:
the non-oriented electrical steel sheet has an iron loss (W$_{10/400}$) of 12 W/kg or less.

9. A method for manufacturing a non-oriented electrical steel sheet, the method comprising:

heating a slab containing, by wt%, 0.005% or less of C, 2.5 to 4.0% or less of Si, 0.1% or less of P, 0.1 to 2.0% of Al, 0.2 to 2.5% of Mn, 0.003% or less of N, 0.005% or less of Ti and Nb, 0.003% or less of S, 0.005 to 0.025% of V, 0.1% or less of Cu, and a balance of Fe and inevitably mixed impurities, and satisfying the following Expression 1;
hot-rolling the slab to manufacture a hot-rolled sheet;
cold-rolling the hot-rolled sheet to manufacture a cold-rolled sheet; and
performing final annealing on the cold-rolled sheet,

[Expression 1]

$$(51*[C])/12-0.002 \leq [V] \leq (51*[C])/12+0.004$$

in Expression 1, [C] and [V] represent contents (wt%) of C and V, respectively.

10. The method for manufacturing a non-oriented electrical steel sheet of claim 9, wherein:

in the heating of the slab,
a heating temperature of the slab is 1,100 to 1,250°C.

11. The method for manufacturing a non-oriented electrical steel sheet of claim 9, further comprising,

after the hot-rolling of the slab to manufacture the hot-rolled sheet,
annealing the hot-rolled sheet,
wherein an annealing temperature of the hot-rolled sheet is 850 to 1,200°C.

12. The method for manufacturing a non-oriented electrical steel sheet of claim 9, wherein:

in the cold-rolling of the hot-rolled sheet to manufacture the cold-rolled sheet,
the cold-rolling is performed once or twice or more with intermediate annealing therebetween.

13. The method for manufacturing a non-oriented electrical steel sheet of claim 9, wherein:

in the performing of the final annealing on the cold-rolled sheet,
a final annealing temperature is 900 to 1,050°C.

14. The method for manufacturing a non-oriented electrical steel sheet of claim 9, further comprising,

after the performing of the final annealing on the cold-rolled sheet,
coating the finally annealed steel sheet with an insulating film.

15. The method for manufacturing a non-oriented electrical steel sheet of claim 9, wherein:
an average grain diameter on the finally annealed steel sheet is 50 to 150 $\mu$m.

# FIG. 1

## INTERNATIONAL SEARCH REPORT

| International application No. |
| --- |
| **PCT/KR2020/018269** |

### A. CLASSIFICATION OF SUBJECT MATTER

**C22C 38/02**(2006.01)i; **C22C 38/04**(2006.01)i; **C22C 38/06**(2006.01)i; **C22C 38/14**(2006.01)i; **C22C 38/16**(2006.01)i; **C21D 8/12**(2006.01)i

According to International Patent Classification (IPC) or to both national classification and IPC

### B. FIELDS SEARCHED

Minimum documentation searched (classification system followed by classification symbols)

C22C 38/02(2006.01); B21B 3/02(2006.01); C21D 8/12(2006.01); C22C 38/00(2006.01); C22C 38/14(2006.01); C22C 38/60(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 무방향성 전기강판(non-oriented electromagnetic steel), 바나듐(V), 망간(Mn), 규소(Si), 알루미늄(Al), 탄화물(carbide)

### C. DOCUMENTS CONSIDERED TO BE RELEVANT

| Category* | Citation of document, with indication, where appropriate, of the relevant passages | Relevant to claim No. |
| --- | --- | --- |
| X | KR 10-2013-0116332 A (NIPPON STEEL & SUMITOMO METAL CORPORATION) 23 October 2013 (2013-10-23) See paragraphs [0138], [0147]-[0155] and [0174], claims 1-2 and 5 and table 1. | 1-15 |
| A | KR 10-2013-0136570 A (NIPPON STEEL & SUMITOMO METAL CORPORATION) 12 December 2013 (2013-12-12) See claims 1 and 5. | 1-15 |
| A | JP 10-88298 A (NKK CORP.) 07 April 1998 (1998-04-07) See claims 1-4. | 1-15 |
| A | KR 10-1110257 B1 (POSCO) 16 February 2012 (2012-02-16) See claims 1, 4-5 and 7-8. | 1-15 |
| A | WO 2018-117602 A1 (POSCO) 28 June 2018 (2018-06-28) See claims 1 and 12. | 1-15 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **04 March 2021** | **05 March 2021** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

## INTERNATIONAL SEARCH REPORT
### Information on patent family members

| International application No. |
| --- |
| **PCT/KR2020/018269** |

| Patent document cited in search report | | | Publication date (day/month/year) | Patent family member(s) | | | Publication date (day/month/year) |
| --- | --- | --- | --- | --- | --- | --- | --- |
| KR | 10-2013-0116332 | A | 23 October 2013 | CN | 103415638 | A | 27 November 2013 |
| | | | | CN | 103415638 | B | 02 September 2015 |
| | | | | EP | 2746418 | A1 | 25 June 2014 |
| | | | | EP | 2746418 | B1 | 14 December 2016 |
| | | | | EP | 3173503 | A1 | 31 May 2017 |
| | | | | EP | 3173503 | B1 | 26 September 2018 |
| | | | | HK | 1192593 | A1 | 22 August 2014 |
| | | | | JP | 5321764 | B2 | 23 October 2013 |
| | | | | PL | 2746418 | T3 | 31 May 2017 |
| | | | | PL | 3173503 | T3 | 30 April 2019 |
| | | | | TW | 201319272 | A | 16 May 2013 |
| | | | | TW | I457449 | B | 21 October 2014 |
| | | | | US | 2013-0309525 | A1 | 21 November 2013 |
| | | | | US | 9721706 | B2 | 01 August 2017 |
| | | | | WO | 2013-024899 | A1 | 21 February 2013 |
| KR | 10-2013-0136570 | A | 12 December 2013 | CN | 103534376 | A | 22 January 2014 |
| | | | | CN | 103534376 | B | 17 August 2016 |
| | | | | EP | 2746415 | A1 | 25 June 2014 |
| | | | | EP | 2746415 | B1 | 24 April 2019 |
| | | | | HK | 1193849 | A1 | 03 October 2014 |
| | | | | JP | 5713100 | B2 | 07 May 2015 |
| | | | | KR | 10-2015-0116908 | A | 16 October 2015 |
| | | | | KR | 10-2017-0005517 | A | 13 January 2017 |
| | | | | PL | 2746415 | T3 | 31 October 2019 |
| | | | | TW | 201319269 | A | 16 May 2013 |
| | | | | TW | I499677 | B | 11 September 2015 |
| | | | | US | 2014-0113159 | A1 | 24 April 2014 |
| | | | | US | 9512500 | B2 | 06 December 2016 |
| | | | | WO | 2013-024894 | A1 | 21 February 2013 |
| JP | 10-088298 | A | 07 April 1998 | None | | | |
| KR | 10-1110257 | B1 | 16 February 2012 | KR | 10-2011-0015278 | A | 15 February 2011 |
| WO | 2018-117602 | A1 | 28 June 2018 | CN | 110073021 | A | 30 July 2019 |
| | | | | EP | 3556884 | A1 | 23 October 2019 |
| | | | | JP | 2020-509182 | A | 26 March 2020 |
| | | | | KR | 10-1918720 | B1 | 14 November 2018 |
| | | | | KR | 10-2018-0070951 | A | 27 June 2018 |
| | | | | US | 2020-0087748 | A1 | 19 March 2020 |

Form PCT/ISA/210 (patent family annex) (July 2019)